Europäisches Patentamt

European Patent Office

Office européen des brevets

(11) Publication number: **0 180 468 B1**

# EUROPEAN PATENT SPECIFICATION

(45) Date of publication of patent specification: **13.03.91**  (51) Int. Cl.⁵: **B65D 81/24**

(21) Application number: **85307871.5**

(22) Date of filing: **30.10.85**

The file contains technical information submitted
after the application was filed and not included in
this specification

(54) **Preservation of foodstuffs, plants and plant materials and packaging material for use in this preservation.**

(30) Priority: **30.10.84 JP 228296/84**
**23.05.85 JP 111140/85**

(43) Date of publication of application:
**07.05.86 Bulletin 86/19**

(45) Publication of the grant of the patent:
**13.03.91 Bulletin 91/11**

(84) Designated Contracting States:
**BE CH DE FR GB IT LI NL SE**

(56) References cited:
**CH-A- 458 903**
**JP-A-60 193 941**
**US-A- 4 059 048**
**US-A- 4 550 026**

**CHEMICAL ABSTRACTS :(1985)**
**Vol.102:202891 b**

(73) Proprietor: **Seiwa Technological Laboratories, Limited**
**4-19-10 Azusawa Itabashi-ku**
**Tokyo(JP)**

(72) Inventor: **Fukazawa, Ryutaro**
**c/o Seiwa Technological Lab. Ltd. 4-19-10, Azusawa**
**Itabashi-ku Tokyo(JP)**
Inventor: **Sato, Mieko**
**c/o Seiwa Technological Lab. Ltd. 4-19-10, Azusawa**
**Itabashi-ku Tokyo(JP)**

(74) Representative: **Gibson, Christian John Robert et al**
**MARKS & CLERK 57/60 Lincoln's Inn Fields**
**London WC2A 3LS(GB)**

## Description

The present invention relates to a method of preserving foodstuffs (including meat, fish and vegetable foodstuffs) as well as non-food plants and plant materials (including cut flowers, seeds and bulbs). The invention also provides a packaging material for use in this process.

The present invention makes use of the preservative properties of the compound hinokitiol. Hinokitiol is a 7-membered ring compound which is contained in an acidic oil derived from certain kinds of perennial plant; it may also be synthesized by well-known routes. It was first described as one of the components of an extract from the heart wood of trees of the species Thuja plicata and named $\beta$-thujaplicin [see, for example, H. Erdtman et al ., Nature 161, 719 (1948), H. Erdtman et al ., Acta Chem. Scand. 2 , 625 (1948) and H. MacLean et al ., Anal. Chem. 28, 509 (1956)] but this was subsequently identified with an extract from the heart wood of the Japanese hinoki (chamaecyparis obtusa) which had been named hinokitiol [T. Nozoe, Bull. Chem. Soc. Japan 11, 295 (1936)] and the material is now commonly termed "hinokitiol" although in older literature the term "$\beta$-thujaplicin" may be used.

Hinokitiol has strong bactericidal and bacteriostatic activity and has been used medically and in foods, particularly for the preservation of fresh fish. Its use for preventing the discoloration of animal and plant products is described in Japanese Patent Application No. 195819/82 and its use as a food preservative is described in Japanese Patent Application No. 98976/83.

However, the previous proposals for using hinokitiol as a preservative have entailed the preparation of a solution of this compound and impregnation of the material to be preserved with such a solution. Contact of foodstuffs and other plant matter with solutions, however, leads to loss of some components (often vital flavouring or colouring components) from the material to be preserved and, depending upon the nature of the preservative, may render the foodstuff unpalatable or even hazardous to consume. Moreover, preservation of such items as cut flowers by immersion is ineffectual and impractical. In practice, the known methods of preserving fish and plant products with hinokitiol have, because of its disadvantages, only been used in Japan and then only to a very limited extent.

A very wide variety of different methods of preserving foodstuffs and non-food plant material is known, the methods varying depending upon the nature of the material to be preserved and such factors as whether the material is to be eaten or is merely for decorative purposes. For example, preservation of foodstuffs has been effected by, inter alia, the following methods: mixing a food preservative, such as an antibacterial or antimycotic agent, with the food or immersing the food in one or more of these agents; a vacuum preservation method in which the food is packaged in an air-impermeable container and the air is then removed from the container; a gaseous displacement method, in which the food is packaged in a container and the air is displaced by an inert gas such as carbon dioxide or nitrogen; and a method in which the foodstuff is permeated with alcohol vapor.

However, the methods in which preservative agents are mixed with foodstuffs or the foodstuffs are immersed in such agents are restricted in their practical application depending upon the nature of such agents and the nature of the food; the use of many such agents is often prohibited or severely restricted by consumer protection legislation. For example, in most countries, no preservative agents are allowed to be mixed with fresh meat or vegetables, whilst fruits and mushrooms are often decolourized or damaged by use of such agents or the solvents employed for dissolving them.

Foodstuffs generally begin to deteriorate as a result of the proliferation of microbes falling on their surfaces from the air and most food begins to deteriorate or decay mainly from its surface. Edible herbs are one exception to this in that their leaves generally do not allow microbes to proliferate, since the cell membranes are strong, but cells on the cut end of the leafstalk portion are damaged by reaping and sap leaks from these cut ends, and provides a good medium for the proliferation of microbes. Accordingly, in the case of edible herbs, deterioration or decay often begins at the stalk and proceeds from the cut end towards the interior.

Thus, the vacuum preservation and gaseous displacement methods are based upon excluding microbes by the physical barrier of the packaging and preventing them from proliferating by removing oxygen from the environment of the foodstuff. These methods, although often satisfactory, have the disadvantages that special apparatus is required and that they can only be applied to packaging of the hermetically sealed type.

Accordingly, of the known methods of preserving foods, most have one or more disadvantages, e.g. restricted application, expense or inconvenience of application or they damage the character or quality of the product being preserved.

The problems arising from the preservation of non-food plant materials are generally somewhat different, since such materials are not for human consumption and accordingly there is no need to preserve flavour or restrict preservatives to non-poisonous ones. However, such products have their own problems. For example, as transportation becomes more efficient, production of speciality products has often become localized considerable distances away from the region where such products are consumed. In the case of cut flowers, for example, flowers for use in Japan are often imported from such diverse sources as New Zealand or the Netherlands; flowers bought in Great Britain are often produced in the Netherlands or the Channel Islands; and flowers sold in some States of the USA are often produced in States a thousand or more kilometres away. Accordingly, it is necessary to provide a method of preserving the freshness and appearance of such cut flowers not only during transportation but for an extended period after the flowers have been bought and immersed in water by the consumer.

Many of the methods employed for the preservation of foodstuffs cannot be employed in a similar manner for the preservation of cut flowers, as it is necessary to preserve intact the delicate petals of flowers and any significant damage to these petals can severely reduce or even altogether destroy the value of the cut flowers. Moreover, the price of cut flowers is often such that any very expensive method of preservation is impractical at all but the luxury end of the market.

The most common method of preserving nonfood plant material, including flowers, seeds, bulbs and seedlings, is to dip all or part of the plant material into a preservative solution, for example a solution of an antibiotic, a silver compound or a sulphur compound. In the case of cut flowers, the most common method of preservation is to dip the cut end into an aqueous solution of a silver compound. However, dipping methods are difficult to operate efficiently and cannot easily be controlled so as to ensure a specific desired concentration of the preservative agent without developing phytotoxicity. Moreover, silver compounds can give rise to problems of pollution upon discharge, e.g. when the dead flowers are disposed of by the consumer or when the water in which the flowers were immersed by the consumer is thrown away.

Also, although agrochemicals have been applied to seedlings and bulbs, these can have adverse effects on the health of workers.

There is, therefore, a substantial and increasing need for a simple, cheap and safe method of preserving the freshness of foodstuffs and of nonfood plant materials.

We have now discovered a process for preserving biological products such as foodstuffs and non-food plant material, which does not necessitate impregnation of the biological material with the preservative.

We have also discovered a packaging material which may be employed for the preservation of biological products.

Thus, the present invention provides a process for preserving degradable biological products selected from foodstuffs and non-food plant material, which process comprises packaging said product in a packaging material containing or enclosing a solid preservative which is at least one of hinokitiol, salts of hinokitiol and inclusion compounds of hinokitiol.

The invention also provides a packaging material impregnated with a solid preservative which is at least one of hinokitiol, salts of hinokitiol and inclusion compounds of hinokitiol.

Hinokitiol is an acidic material and can, therefore, form salts with suitable bases, such salts being usable in the present invention. In principle, there is no particular limitation on the nature of the salt to be employed, provided that, where the packaging is to be used for the preservation of foodstuffs, the salt should not be toxic and, where it is to be used for the preservation of plants, the packaging should not be phytotoxic. Salts can, therefore, be formed with metals, e.g. alkali metals (particularly sodium or potassium), organic bases and basic amino acids; however, the sodium and potassium salts are preferred. Also, hinokitiol forms an inclusion compound with cyclodextrin, which inclusion compound has a higher water solubility than does hinokitiol itself; such an inclusion compound may likewise be employed in the present invention. The cyclodextrin employed may be α-cyclodextrin, β-cyclodextrin or γ-cyclodextrin or may be a mixture of any two or all three of these forms of cyclodextrin. Inclusion compounds of hinokitiol in cyclodextrin are described in European Patent Application No. 85306517.5. As discussed in said Patent Application, the preferred inclusion compound is an inclusion compound of hinokitiol in β-cyclodextrin.

In one preferred embodiment of the present invention, the packaging material itself is impregnated with hinokitiol. This may be achieved by immersing the packaging material in a solution or suspension of hinokitiol (or its salt or inclusion compound) in water or in an organic solvent or by coating such a solution or suspension onto the packaging material or by spraying the packaging material with such a solution or suspension. After immersion, coating or spraying, the packaging material is preferably then dried to remove the water or organic solvent.

The packaging material which is impregnated or coated with hinokitiol in accordance with this embodiment of the invention may be made from a wide range of materials and there is no particular restriction on the particular material chosen. For example, the packaging material may be a paper, cloth, non-woven fabric, viscose sheet (such as Cellophane ® pulp (e.g. wood pulp), plastics film, plastics sheet, wood, metal (e.g. metal plate), synthetic resin powder (e.g. polyacrylic acid powder), cellulose, powdered cellulose, silicon dioxide or zeolite.

In the case of powdered or granular materials, these may be used as such as packaging or they may first be formed into an appropriate sheet or other shaped product.

Preferably, the packaging material is in the form of a sheet which can be wrapped around the product to be preserved. However, it may also be formed into a shaped container (e.g. a bag or box of any desired shape) to cover all or part of the biological product.

In an alternative embodiment of the invention, the hinokitiol may be placed into a container (e.g. bag or box) made of a material which is permeable to hinokitiol vapour or which contains apertures through which the hinokitiol vapour can pass but the solid hinokitiol cannot pass, and this container in turn is placed inside a larger container which also contains the biological product to be preserved. The smaller container for the hinokitiol is preferably made of a highly gas permeable cloth, Japanese paper, non-woven fabric or porous polyethylene, or it may be a porous box made of a metal or of a synthetic resin.

There is, of course, no restriction upon the nature of the material employed to form the larger container (i.e. that containing both the smaller container and the biological product) and, inter alia, any of the materials suggested for use in the first embodiment of the invention may be employed.

In a third embodiment of the invention, a container for the biological product has a double wall, the inside wall being of a material which is permeable to hinokitiol vapour or which has suitable apertures through which the hinokitiol vapour may pass. Hinokitiol or a material impregnated with hinokitiol or having hinokitiol coated or adsorbed on it may then be placed between the inner and outer walls of the double-walled container, whilst the biological product is placed within the space formed by the inner wall.

When preserving foodstuffs by means of the present invention, in many cases it is desirable that the whole of the foodstuff should be contained within a container impregnated with the hinokitiol or itself also containing hinokitiol. For example, where the foodstuff is the meat of an animal or of fish, it is preferred that the packaging material should be impregnated with said hinokitiol and should be wrapped around the whole outer surface of said meat.

On the other hand, in the case of vegetables and other plants (e.g. cut flowers or fresh herbs) which simply have a cut end, the advantages of the invention may be achieved merely by wrapping the cut ends (and possibly a few centimeters of the stems or leafstalks) in the packaging material of the invention and leaving the remainder of the vegetable or other plant either unpackaged or packaged by conventional means.

In general terms, in putting the present invention into effect, the principle to be adopted is that it is only necessary to package that part of the biological product which is most susceptible to decay in the packaging material of the invention. In the case of cut flowers, herbs or other vegetables (e.g. lettuces or cabbages) having cut ends, the part most susceptible to decay is the cut end and the region immediately around the cut end; in that case, it is only this region which need be protected by the present invention, although, if desired, any greater part of the biological product or, indeed, the whole of the biological product may be protected by means of the present invention. On the other hand, in the case of such products as meat, eggs, bulbs or seeds, where decay can commence on any part of the product, it is desirable that the whole outer surface of the product should be protected by means of the present invention.

The invention is further illustrated by the following non-limiting Examples.

## Preparation of a Cyclodextrin Inclusion Compound with Hinokitiol

1521.0 mg ($1.3 \times 10^{-3}$ mole) of $\beta$-cyclodextrin (manufactured by Nihon Shokukin Kako K. K. under the trade name Celdex N) were dissolved, with stirring, in 80 ml of water, and then 219.8 mg ($1.3 \times 10^{-3}$ mole) of hinokitiol were added to the resulting solution. This mixture was then heated, with stirring, to about 60°C, to prepare a homogeneous suspension, after which it was allowed to stand for 48 hours in a refrigerator at 5°C and was then added to and mixed with 400 ml of acetone at -35°C, with stirring. The liquid temperature rose to about -28°C. Immediately upon mixing, a precipitate separated. This was collected by filtration under reduced pressure and then dried in a vacuum desiccator for 1 hour.

The resulting dry inclusion compound was ground to a powder in a mortar and then dissolved in water. The content of hinokitiol in the inclusion compound was determined by ultraviolet absorption (wavelength 245 nm). It was found that there were approximately equimolar amounts of cyclodextrin and hinokitiol in this compound; the actual molar ratio of cyclodextrin to hinokitiol was 1:0.94. The total yield of inclusion compound was 1568.5 mg and each 1 mg of this compound contained 0.120 mg of hinokitiol.

## EXAMPLE 1

### Preservation of Lettuce

An aqueous solution was prepared by dissolving the inclusion compound of hinokitiol in $\beta$-cyclodextrin prepared as described above in water to a concentration of 100 ppm. 10 ml of this aqueous solution were evenly sprayed onto 10 g of sodium polyacrylate powder (manufaotured by Nihon Kayaku K.K.), and then the resulting powder was dried by blowing it with hot air at 40° C.

Immediately after it had been harvested (in Nagano Prefecture), the cut end of a lettuce was contacted with the sodium polyacrylate powder containing the hinokitiol inclusion compound, and the powder was spread evenly over the cut ends, to cover them completely. A total of 5 fresh lettuces were treated in this way to form a test group.

For purposes of comparison, the cut ends of another 5 lettuces were covered, in the same way as described above, with a sodium polyacrylate powder which had not been treated with hinokitiol. This constituted a control group.

The two groups were immediately put into separate corrugated cardboard boxes and kept at 25° C. On the 3rd day after treatment, the leaves of all 5 lettuces in the control group started to turn brown, and, on the 6th day, they had liquefied to such an extent as to lose their original form. On the other hand, all 5 lettuces of the test group showed almost no change up to the 14th day, either in colour or in shape, compared with when the test had been started. From the 15th day on, one or two small brown spots appeared and, by the 20th day, the number of brown spots had increased to 5-6. However, these spots were limited to only 1 or 2 of the most external leaves, and the insides of the lettuces, after removal of the external leaves, were found not to have changed at all. Furthermore, portions of the lettuces were eaten by the inventors on the 20th day of storage and were found to be edible, although a loss of moisture was perceived.

## EXAMPLE 2

### Preservation of Lettuce

A sheet of paper towel (manufactured by Orion Seishi K.K. of weight 35 g/m²) was cut into a square of dimensions 5 x 5 cm. This sheet was momentarily immersed in 10 ml of an aqueous solution containing a concentration of 100 ppm of an inclusion compound of hinokitiol in $\beta$-cyclodextrin, prepared as described above. The sheet was then withdrawn and dried by blowing it with air at 40° C.

The resulting treated sheet was placed on the cut end of a lettuce immediately after it had been harvested. A total of 5 lettuces were thus treated to form a test group.

For the purposes of comparison, another group (the control group) of 5 lettuces was similarly treated with sheets of paper towel which had not been impregnated with hinokitiol.

The two groups were put into separate corrugated cardboard boxes and kept at 25° C. On the 3rd day after treatment, all 5 lettuces in the control group had started to turn brown and, by the 6th day, they were so liquefied as to lose their original forms. On the other hand, all 5 lettuces of the test group showed almost no change, either in colour or in shape compared with the beginning of the test, right up to the 19th day. On the 20th day, one or two small brown spots appeared on two of the 5 lettuces in the test group. It was not, however, until the 24th day that small spots had appeared on all 5 lettuces. However, these were limited to one or two of the most external leaves and the insides of the lettuces, after removal of the external leaves, showed no change and were found by the inventors to be edible even on the 24th day of storage.

## EXAMPLE 3

### Preservation of Sea Urchin Eggs

The eggs of sea urchins (Hemicentrotus pulcherrimus) which had been collected in Aomori Prefecture were removed and immersed for 20 minutes in sea water in which 0.3% w/v of burnt alum had been dissolved. 50 g of such sea urchin eggs were then packed into each of 10 small wooden containers (15 x 8 x 2 cm) by conventional procedures.

The packed containers were then divided into two groups of five each and, in each group, the boxes were stacked one on top of the other and an empty box was placed on the top of each stack. Each stack was then placed into a corrugated cardboard box (of internal dimensions 15.2 x 8.2 x 12 cm).

One of the corrugated cardboard boxes (that in which the test group was placed) had previously had atomized onto each of its six internal surfaces an alcoholic solution containing 0.01% w/v of hinokitiol and the alcohol was allowed to evaporate off prior to putting the containers into the box. The amount of the alcoholic hinokitiol solution used was 4 ml. The other box was similarly treated, except that the alcohol contained no hinokitiol; the stack of containers subsequently placed into this box constituted the control group.

The two boxes were then kept in a refrigerator at 5°C.

By the 9th day, white mould had begun to grow on the surfaces of the sea urchin eggs in the control group; these surfaces became wet and the eggs were beginning to decompose. On the other hand, in the test group, no change was observed right up to the 25th day. It was not until the 26th day that the beginning of the growth of white mould was observed.

EXAMPLE 4

Preservation of Lemons

A non-woven polypropylene fabric (Palcloth, manufactured by Honshu Seishi K.K.) was cut into a square of dimensions 80 x 80 cm. This square of non-woven fabric was impregnated by immersion in 200 ml of an aqueous solution containing a concentration of 100 ppm of the inclusion compound of hinokitiol in $\beta$-cyclodextrin, prepared as described above. The immersed fabric was then dried by blowing it with hot air at 40°C.

20 fresh lemons (immediately after picking in Hiroshima Prefecture) were then wrapped together in this impregnated non-woven fabric, placed in a corrugated cardboard box, and kept at 25°C; this constituted the test group.

In a similar way, 20 lemons (immediately after picking) were wrapped in a similar non-woven fabric which had not been treated with hinokitiol, placed in a similar corrugated cardboard box and kept at 25°C; this constituted the control group.

By the 8th day, blue mould had begun to grow on three of the lemons in the control group. From then on, the number of lemons on which blue mould was growing continued to increase, until it was present on all 20 lemons by the 14th day. On the other hand, in the test group, no growth of mould or softening of the flesh occurred even after 60 days.

EXAMPLE 5

Preservation of Pickles

1 litre of rice bran was roasted over a low heat and then combined with 1 litre of raw rice bran. Separately, 160 g of table salt were mixed with and dissolved in 400 ml of boiled water which had been cooled down to room temperature, and the resulting solution was mixed with the rice bran mixture. This mixture was then agitated by up-and-down movement several times a day whilst being kept at 25°C for 5 days, to prepare a rice bran pickling medium. After preparation of this medium, 4 cucumbers were washed with water and embedded in the rice bran pickling medium. They were then removed two days later to be used as the pickles in the test. The resulting pickled cucumbers are of the type forming one ingredient of the Japanese pickle "Nuka-Zuke".

Two of the cucumber pickles prepared as described above, together with some extraneous rice bran, were placed in a plastic container (15 x 25 x 8 cm), and water was added until the cucumbers were completely covered by the water. Meanwhile, a piece of gauze (25 x 35 cm) was immersed in 200 ml of an aqueous solution containing 100 ppm of the inclusion compound of hinokitiol in $\beta$-cyclodextrin prepared as described above. The gauze was removed, squeezed to remove excess solution and then dried by blowing it with air at 40°C. It was then spread over the surface of the container to serve as a lid; this constituted the test group.

The other two cucumbers were treated in exactly the same way, except that the piece of gauze placed over the container had simply been immersed in distilled water and then dried by blowing it with air at 40°C; this was the control group.

The two containers were left in a thermostatically controlled vessel at 25°C. 24 hours later, proliferation of yeast was observed over the entire surface of the container containing the control group; on the other hand, no generation of yeast was observed at all for 7 days with the test group.

EXAMPLE 6

Storage of carnations

Fifty carnation flowers (a mixture of red, pink and yellow flowers harvested at Tateyama-city, Chiba-prefecture), were placed in a corrugated cardboard box. Meanwhile 1 g of hinokitiol was placed into a bleached cotton bag (2x2 cm) and the bag was stuck onto the inside of the box cover with adhesive tape (Sellotape - trade mark). The box cover was sealed with gummed tape and then a hole of dimensions 2 x 10 cm was cut on each side of the box.

As a control, fifty carnation flowers were placed in a corrugated cardboard box of the same type, the box cover was sealed with gummed tape and then a hole of dimensions 2 x 10 cm was cut on each side of the box.

Both boxes were transported to our laboratory located at Itabashi-ku, Tokyo, and allowed to stand at room temperature (varying between 14 and 24°C) for one week. The carnation flowers were then removed from their respective boxes. Both flowers and leaves were withered on all 50 flowers in the control group and, even when the cut ends were immersed in water to facilitate water uptake, no improvement was observed. However, all 50 of the carnation flowers placed in the cardboard box also containing hinokitiol were fresh, although somewhat more flowering had proceeded than when harvested. The cut ends were immersed in water, which was constantly replenished to allow for water uptake, and the flowers kept in a sufficiently good condition for appreciation for a further 9 days by water uptake.

EXAMPLE 7

Storage of stocks

10 g of a β-cyclodextrin inclusion compound of hinokitiol prepared as described above were dissolved in 10 litres of hot water at 35°C. 10 sheets of cellophane (manufactured by Fukui Kagaku Kogyo K.K., #60), each of dimensions 60 cm x 60 cm, were dipped into this solution for 5-6 seconds and then the adhering water was removed by a mangle and the sheets were dried for 10 seconds on a hot plate at 110°C. The hinokitiol content in the cellophane was 14 mg/m² according to ultraviolet absorption measurement and the hinokitiol was almost uniformly distributed throughout the cellophane.

10 stocks harvested at Tateyama-city, Chiba-prefecture, were immediately wrapped in the above-mentioned cellophane containing the hinokitiol inclusion compound up to 10 cm from the cut end and the wrapping was then fixed with a rubber band.

As a control, there were employed 10 stocks wrapped with an untreated cellophane.

Both groups of stocks were transported to our laboratory located at Itabashi-ku, Tokyo, and allowed to stand at room temperature (14 - 24°C).

The stocks of the control group all withered and fell within 5 days, whereas the stocks wrapped up with the hinokitiol inclusion compound containing cellophane blossomed without withering over 12 days.

EXAMPLE 8

Storage of pansy seedlings

A commercially available polyethylene sheet was cut into a piece with a size of 20 cm x 25 cm, and one side of this sheet was coated with an aqueous solution of the sodium salt of hinokitiol (100 ppm) by means of a brush and then dried with hot air at 50°C.

20 pansy seedlings, which had been harvested at Konosu-city, Saitama-prefecture, and which had a small amount of soil still adhering to the roots thereof, were placed in a wooden box of dimensions 20 x 25 x 12 cm and covered with a polyethylene sheet coated with the said hinokitiol sodium salt, with the coated face downward. Then a corrugated cardboard plate was placed on top, so as to be supported on the upper four corners of the wooden box.

As a control, 20 pansy seedlings were placed in a wooden box in the same manner as described above, except that there was employed an untreated polyethylene sheet.

Both boxes were allowed to stand at room temperature (varying between 10 and 24°C) for one month, and then the respective seedlings were taken out and grown in the original soil.

Where the polyethylene sheet was treated with hinokitiol, 16 of the 20 pansy seedlings came into bloom, whereas only 4 seedlings did in the control group employing the untreated sheet.

EXAMPLE 9

Storage of pansy seeds

Two groups of pansy seeds, each consisting of 50 grains, were prepared.

A sheet of Japanese paper was dipped into a solution of 1 g of hinokitiol in litre of a hot water at 35°C for 5 seconds. The Japanese paper was then dried by squeezing and air-dried with hot air at 50°C. It was then made into a bag of dimensions 10 cm x 10 cm. One group of said pansy seeds was placed in this bag (the test group), while the other group was placed in the same type of bag but made of an untreated Japanese paper of the same quality (the control group).

Both were stored in a dark place for one year, during which they were stored at ambient temperature for 11 months and in a refrigerator at 5°C for the remaining one month. No. 4 size pots were filled with soil, and set up in a plastic vessel filled with water. The 50 grains of seeds from each group were sown uniformly over the soil of a respective pot and covered thinly with plant ash. They were then allowed to stand at room temperature (22 - 28°C) and observed over two weeks. It was observed that 23 seeds of the 50 sprouted in the test group, but no seeds sprouted in the control group.

EXAMPLE 10

Storage of gladiolus bulbs

1 g of hinokitiol was dispersed and dissolved in 1 litre of a hot water at 60°C. Two corrugated cardboard sheets, each of dimensions 20 cm x 20 cm, were dipped therein and then air-dried at 50°C. One of the said cardboard sheets was laid over the bottom of a corrugated cardboard box of dimensions 27 cm x 22 cm x 5 cm. 5 gladiolus bulbs were placed on this sheet, another treated cardboard sheet was placed on top of them and the box was sealed with gummed tape. A hole of dimensions 2 cm x 5 cm was opened on each side of the corrugated cardboard box, which was then allowed to stand at ambient temperature in a highly humid place (this constituted the test group).

As a control, 5 gladiolus bulbs were placed in a corrugated cardboard box in the same manner as above, except that untreated corrugated cardboard sheets were employed instead of the cardboard treated with hinokitiol. This box was then allowed to stand at the same place as above (the control group).

After they had stood for 6 months, the bulbs were observed, and it was found that all 5 bulbs in the test group had a smooth shell and a tight head, whereas all 5 bulbs in the control group had a rough shell and two of them had developed clearly diseased spots.

EXAMPLE 11

Preservation of lettuce

The experiment described in Example 2 was repeated, except that the sodium salt of hinokitiol was employed in place of the inclusion compound. On the 3rd day, all five of the lettuces in the control group started to turn brown, and, on the 6th day, they were so liquefied as to have lost their original forms. On the other hand, all five of the lettuces of the test group showed almost no change up to the 15th day either in colour or in shape compared with when the test had started, and, on the 16th day, there appeared one or two small spots on one of the five lettuces. It was not until the 22nd day that small spots appeared on all five of the lettuces. However, these were limited to one or two of the most external leaves, and the insides of the lettuces, after removal of the external leaves, showed no change and were found by the inventors to be edible.

Claims

1. A process for preserving degradable biological products selected from foodstuffs and non-food plant material, which process comprises packaging said product in a packaging material containing or enclosing a solid preservative which is at least one of hinokitiol, salts of hinokitiol and inclusion compounds of hinokitiol.

2. A process as claimed in Claim 1, wherein said biological product is a vegetable or fresh herb.

3. A process as claimed in any one of Claims 1 to 2, wherein said packaging material is impregnated with said solid preservative.

4. A process as claimed in Claim 3, wherein said packaging material is in the form of a sheet and is wrapped around at least part of said biological product.

5. A process as claimed in Claim 4, wherein said biological product is a cut flower, fresh herb or vegetable having a cut end and the packaging material is wrapped about said cut end.

6. A process as claimed in any one of Claims 1 to 3, wherein said packaging material is impregnated with said preservative and is wrapped around the whole outer surface of said biological product.

7. A process as claimed in any one of Claims 1 to 6, wherein said solid preservative is hinokitiol, especially a salt of hinokitiol such as the sodium or potassium salt.

8. A process as claimed in any one of Claims 1 to 6, wherein said solid preservative is an inclusion compound of hinokitiol, especially an inclusion compound of hinokitiol within a cyclodextrin such as $\beta$-cyclodextrin.

9. A packaging material impregnated with a solid preservative which is at least one of hinokitiol, salts of hinokitiol and inclusion compounds of hinokitiol.

10. A material as claimed in Claim 9, wherein said material is a sheet material.

11. A material as claimed in Claim 9, which comprises a box at least part of which is impregnated with said preservative.

12. A material as claimed in Claim 9, which comprises a corrugated cardboard sheet.

13. A material as claimed in Claim 9, which comprises a paper.

14. A material as claimed in any one of Claims 9, to 13, wherein said solid preservative is hinokitiol, especially a salt of hinokitiol, such as the sodium or potassium salt.

15. A material as claimed in any one of Claims 9 to 13, wherein said solid preservative is an inclusion compound of hinokitiol, especially an inclusion compound of hinokitiol within a cyclodextrin such as $\beta$-cyclodextrin.

16. An inclusion compound of hinokitiol within a cyclodextrin such as $\beta$-cyclodextrin.


**Revendications**

1. Procédé pour conserver des produits biologiques dégradables choisis parmi des produits alimentaires et des produits végétaux non alimentaires, lequel procédé consiste à emballer ledit produit dans un matériau d'emballage contenant ou renfermant un conservateur solide qui est au moins un composé choisi parmi l'hinokitiol, des sels d'hinokitiol et des composés d'inclusion d'hinokiliol.

2. Procédé selon la revendication 1, dans lequel ledit produit biologique est un légume ou des fines herbes traîches.

3. Procédé selon l'une quelconque des revendications 1 et 2, dans lequel ledit matériau d'emballage est imprégné dudit conservateur solide.

4. Procédé selon la revendication 3, dans lequel ledit matériau d'emballage est sous la forme d'une feuille et il est enroulé autour d'une partie au moins dudit produit biologique.

5. Procédé selon la revendication 4, dans lequel ledit produit biologique est une fleur coupée, des fines herbes fraîches ou un légume ayant une extrémité coupée et le matériau d'emballage est enroulé autour de ladite extrémité coupée.

6. Procédé selon l'une quelconque des revendications 1 à 3, dans lequel ledit matériau d'emballage est imprégné dudit conservateur et il est placé autour de toute la surface extérieure dudit produit biologique.

7. Procédé selon l'une quelconque des revendications 1 à 6, dans lequel ledit conservateur solide est l'hinokitiol, en particulier un sel d'hinokitiol tel que le sel de sodium ou de potassium.

8. Procédé selon l'une quelconque des revendications 1 à 6, dans lequel ledit conservateur solide est un composé d'inclusion d'hinokitiol, en particulier un composé d'inclusion d'hinokitiol dans une cyclodextrine telle que la $\beta$-cyclodextrine.

9. Matériau d'emballage imprégné d'un conservateur solide qui est au moins un composé choisi parmi l'hinokitiol, des sels d'hinokitiol et des composés d'inclusion d'hinokitiol.

10. Matériau selon la revendication 9, dans lequel ledit matériau est un matériau en feuille.

11. Matériau selon la revendication 9, qui consiste en une boîte dont une partie au moins est imprégnée dudit conservateur.

12. Matériau selon la revendication 9, qui comprend en une feuille de carton ondulé.

13. Matériau selon la revendication 9, qui comprend en un papier.

14. Matériau selon l'une quelconque des revendications 9 à 13, dans lequel ledit conservateur solide est l'hinokitiol, en particulier un sel d'hinokitiol, tel que le sel de sodium ou de potassium.

15. Matériau selon l'une quelconque des revendications 9 à 13, dans lequel ledit conservateur solide est un composé d'inclusion d'hinokitiol, en particulier un composé d'inclusion d'hinokitiol dans une cyclodextrine telle que la $\beta$-cyclodextrine.

16. Composé d'inclusion d'hinokitiol dans une cyclodextrine telle que la $\beta$-cyclodextrine.

**Ansprüche**

1. Verfahren zur Konservierung von abbaubaren biologischen Produkten, ausgewählt unter Nahrungsmitteln und pflanzlichem Material, das kein Nahrungsmittel darstellt, bei dem man das Produkt in ein Verpackungsmaterial verpackt, das ein festes Konservierungsmittel enthält oder einschließt, welches zumindest eine der Komponenten Hinokitiol, Salze des Hinokitiols und Einschlußverbindungen des Hinokitiols ist.

2. Verfahren gemäß Anspruch 1, bei dem das biologische Produkt ein Gemüse oder frisches Kraut ist.

3. Verfahren gemäß einem der Ansprüche 1 bis 2, bei dem das Verpackungsmaterial mit dem festen Konservierungsmittel imprägniert ist.

4. Verfahren gemäß Anspruch 3, bei dem das verpackungsmaterial in Form einer Folie vorliegt und um zumindest einen Teil des biologischen Produkts gewickelt ist.

5. Verfahren gemäß Anspruch 4, bei dem es sich bei dem biologischen Produkt um Schnittblumen, geschnittene frische Kräuter oder geschnittenes Gemüse mit einem Schnittende handelt, und das Verpackungsmaterial um dieses Schnittende gewickelt ist.

6. Verfahren gemäß einem der Ansprüche 1 bis 3, bei dem das Verpackungsmaterial mit dem Konservierungsmittel imprägniert ist und um die gesamte Außenoberfläche des biologischen Produkts gewickelt ist.

7. Verfahren gemäß einem der Ansprüche 1 bis 6, bei dem das feste Konservierungsmittel Hinokitiol, insbesondere ein Salz des Hinokitiols wie das Natrium- oder Kaliumsalz ist.

8. Verfahren gemäß einem der Ansprüche 1 bis 6, bei dem das feste Konservierungsmittel eine Einschlußverbindung des Hinokitiols, insbesondere eine Einschlußverbindung von Hinokitiol innerhalb eines Cyclodextrins wie ß-Cyclodextrin ist.

9. Verpackungsmaterial, das mit einem festen Konservierungsmittel imprägniert ist, bei dem es sich zumindest um eine der Komponenten Hinokitiol, Salze des Hinokitiols und Einschlußverbindungen des Hinokitiols handelt.

10. Material gemäß Anspruch 9, bei dem das Material ein Folienmaterial ist.

11. Material gemäß Anspruch 9, das einen Behälter umfaßt, von dem zumindest ein Teil mit dem Konservierungsmittel imprägniert ist.

12. Material gemäß Anspruch 9, das einen Wellpappe-Bogen umfaßt.

13. Material gemäß Anspruch 9, das ein Papier umfaßt.

14. Material gemäß einem der Ansprüche 9 bis 13, bei dem das feste Konservierungsmittel Hinokitiol, insbesondere ein Salz des Hinokitiols wie das Natrium- oder Kaliumsalz ist.

15. Material gemäß einem der Ansprüche 9 bis 13, bei dem das feste Konservierungsmittel eine Einschlußverbindung des Hinokitiols, insbesondere eine Einschlußverbindung von Hinokitiol innerhalb eines Cylcodextrins wie ß-Cyclodextrin ist.

16. Einschlußverbindung des Hinokitiols in einem Cyclodextrin wie ß-Cyclodextrin.